# EUROPEAN PATENT SPECIFICATION

(11) **EP 2 428 107 B1**
(45) Date of publication and mention of the grant of the patent: **07.11.2012**
(21) Application number: 10425293.7
(22) Date of filing: 09.09.2010
(51) Int. Cl.: A01D 34/00

(54) **Lawn-mower**
Rasenmäher
Tondeuse à gazon

(43) Date of publication of application: 14.03.2012
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 2 082 638
- US-A1- 2003 236 723
- US-A1- 2005 007 057

## Description

The present invention concerns a lawn-mower.

As is well-known, currently automatic lawn-mowers are configured for operating within predetermined cutting areas.

Lawn-mowers are used for keeping meadows, gardens and grassy areas in general in optimal condition, i.e. for keeping the grass below a certain height in substantially homogeneous manner throughout the cutting area.

Currently, lawn-mowers of known type are provided with their own electronic intelligence, and are capable of moving autonomously within the cutting area.

Typically, a movement of chance or "random" type is used.

This means that the lawn-mower moves in directions determined by chance, until it arrives in proximity to the limit of the cutting area. When this occurs, it reverses its own direction of movement and resumes its random movement within the cutting area.

After a certain period of time, the lawn-mower finds that it has passed over the entire cutting area, and has therefore completed its task.

In the event that the cutting area is of particularly extensive dimensions, (for example, in the case of a large garden), a use such as that briefly described above necessarily entails very long working times, since random movement over extensive areas inevitably necessitates a considerable time before all the desired terrain is covered.

Another movement of known type is movement "in a spiral", according to which the lawn-mower starts from a substantially central position in the cutting area, and proceeds according to a trajectory that is actually spiral, so as to progressively increase the radius of curvature of the trajectory itself.

Even using this technique, in the case of particularly extensive cutting areas, the times for executing the work become extremely long.

A series of operational disadvantages follow from this, relating for example to the excessive consumption of energy necessary for jobs that take a long time.

Furthermore, in the light of the above, the lawn-mower is being used inefficiently, causing a shortening of its useful life (for example because of the significant wear on all the moving mechanical parts involved, thus increasing the probability of breakdowns and increasing the frequency of maintenance operations.

In addition to the above, lawn-mowers of known type are not always able to keep the height of the grass within the cutting area uniform, within acceptable limits.

From US-A1-2005/007057 is known a mower comprising a memory module and control unit.

An object of the present invention is to make available a lawn-mower which is capable of optimizing its own operation by efficiently managing its own movement within the cutting area.

In particular an object of the present invention is to make available a lawn-mower which is capable of carrying out its task in less time than the known devices.

A further object of the invention is to provide a lawn-mower which is able to keep the height of the grass within the cutting area substantially uniform, within acceptable limits.

An ancillary object of the invention is to provide a lawn-mower which can be accurately and reliably monitored even without the intervention of an operator on site.

Another ancillary object of the invention is to make available a lawn-mower in which at least some breakdowns, operational mishaps and malfunctions can be overcome without the intervention of an operator on site.

These and yet other objects are substantially achieved by a lawn-mower according to the descriptions given in the attached claims.

Further characteristics and advantages will become more apparent from the detailed description of a preferred, but not exclusive, embodiment of the invention.

This description is provided below with reference to the attached drawings (these too having a purely exemplary and therefore non-limiting purpose), in which:
- figure 1 schematically shows a lawn-mower according to the present invention;
- figure 2 shows a block diagram of a lawn-mower according to the invention;
- figure 3 schematically shows a cutting area in which the lawn-mower according to the invention is operating.

With reference to the attached drawings, no. 1 comprehensively denotes a lawn-mower according to the invention.

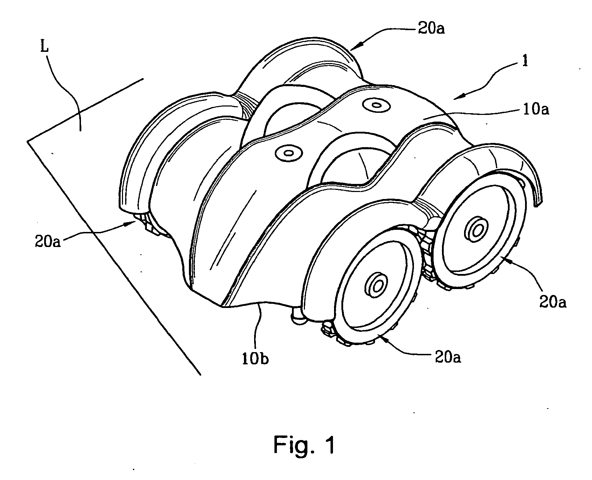

The lawn-mower 1 (figure 1) comprises first of all a frame 10; the frame 10 can comprise, for example, an upper shell 10a and a lower shell 10b, preferably irremovably connected to each other.

The upper shell 10a and the lower shell 10b can be made, for example, of plastic.

The lawn-mower 1 furthermore comprises movement means 20 mounted on the frame 10 to move the frame 10 with respect to a work surface or cutting area L; the latter can be a meadow, a garden, a flowerbed, or in general any surface on which the lawn-mower 1 is called upon to operate.

The movement means 20 comprise preferably a plurality of wheels 20a, mounted on the frame 10, and one or more motors, configured for moving these wheels 20a in rotation.

By way of example, the lawn-mower 1 shown in the attached drawings is provided with four wheels 20a, suitably motorized.

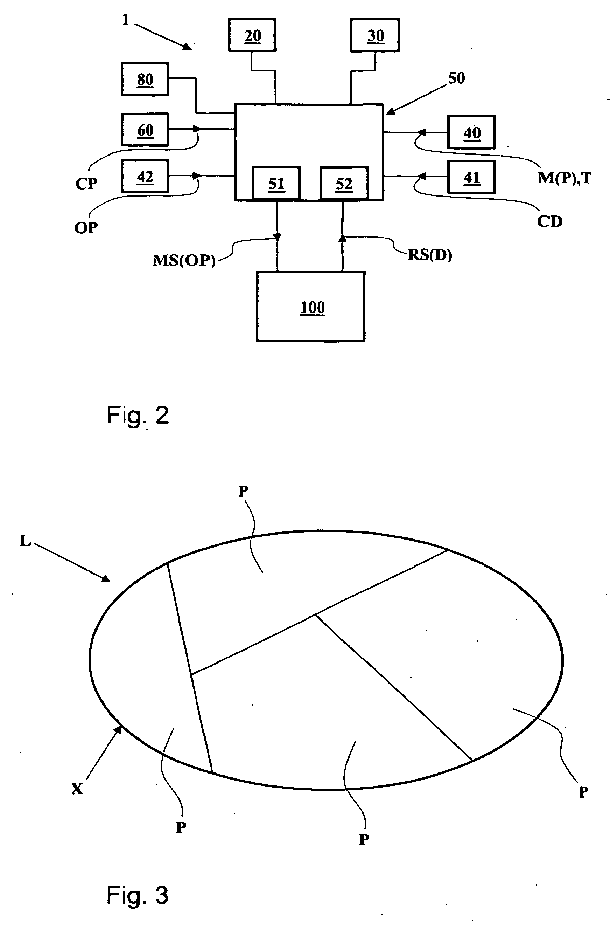

The lawn-mower 1 furthermore comprises one or more blades 30 (schematically shown in figure 2), mounted on the frame 10, for cutting the grass on the work surface L.

Advantageously, the blades 30 are moved by suitable motors, housed within the frame 10.

By way of example, the above-mentioned motors can be electric motors, powered by a battery; the latter can be of rechargeable type. Preferably the recharging, which takes place at a fixed station or recharging base, is achieved by means of an electrical coupling, in particular of inductive type. Preferably, the above-mentioned battery can also supply a control unit (which will be described below), and other electrical/electronic devices provided on board the lawn-mower 1.

Advantageously the lawn-mower 1 furthermore comprises a first memory module 40 (figure 2), housed in the frame 10; the first memory module 40 has, stored within it, principal parameters M and time references T.

The principal parameters M are representative of a plurality of portions P into which the cutting area L is divided.

In practice, the principal parameters M define the geographical coordinates of the boundaries or perimeters of each portion P into which the cutting area L is divided.

As regards the time references T, each of them is associated with a respective one of the portions P of the cutting area L; each time reference T is representative of when the lawn-mower 1 has effected a cutting action in this portion P.

More particularly, each time reference T is representative of when the lawn-mower 1 has effected the last cutting action in the respective portion P of the cutting area L.

The lawn-mower 1 furthermore comprises a control unit (50), housed in the frame 10.

The control unit 50 is operatively associated with the movement means 20, to the blade (or blades) 30, and to the first memory module 40.

The control unit 50 is configured for identifying, in the first memory register 40, the oldest among the time references T contained in it. The control unit 50 then sets about selecting the portion P of the cutting area L associated with the time reference T identified.

In other words, the control unit 50 selects the portion P of cutting area L in which no cutting operation has been performed for the longest time.

In practice, the control unit 50 selects that portion of cutting area in which, with all probability, the grass is longest, and is therefore most in need of being cut.

Therefore, having selected this portion P of the cutting area L, the control unit 50 controls the movement means 20 and the above-mentioned one or more blades 30 so that the lawn-mower is moved to this portion P and carries out an operation of cutting the grass.

Preferably the lawn-mower 1 furthermore comprises a locating device (60), capable of determining the current position CP in which the lawn-mower is located.

Preferably, the locating device is a GPS (Global Positioning System) device.

In practice the locating device 60 provides geographical coordinates identifying the position in which the device itself is located. The locating device 60 being mounted on the frame 10 of the lawn-mower 1, these geographical coordinates will also be representative of the position in which the lawn-mower 1 itself is located.

The locating device 60 is operatively associated with the control unit 50 at least to allow the latter to monitor the movement of the lawn-mower 1.

In particular the control unit 50, knowing the coordinates of the portion P (by means of the principal parameters M) and the current position CP of the lawn-mower 1 (by means of the locating device 60) can move the lawn-mower 1 itself appropriately, according to the technique here described.

Preferably, the control unit 50 compares the current position CP of the lawn-mower 1 with the data representing the perimeter of the selected portion P. If the lawn-mower 1 is located outside the selected portion P, the control unit 50 activates the movement means 20 to bring the lawn-mower 1 within the selected portion P.

In one embodiment, the above-mentioned one or more blades 30 can also be activated during the movement of the lawn-mower 1 from the starting-point to the selected portion P.

If the lawn-mower 1 is located within the selected portion P, the control unit 50 sets about activating the movement means 20 and the above-mentioned one or more blades 30, so that the lawn-mower 1 sets about cutting the grass in the selected portion P of the cutting area L.

The movement within the cutting area L can be controlled according to any algorithm of known type, following for example random trajectories, spiral trajectories etc.

Preferably, the control unit 50 is configured for updating the principal parameters M and/or the time references T after carrying out the cutting operation in the selected portion P.

This means that, at the end of the cutting operation (for example, due to the occurrence of the exhaustion of batteries with which the lawn-mower is provided), the control unit 50 sets about memorizing, in the first register 40, which zone was the subject of the cutting operation (principal parameters P), and a time reference T representing how much of this cutting operation has been performed.

It should be noted that the zone which has been the subject of the cutting operation does not necessarily coincide perfectly with the selected portion P in which the lawn-mower 1 has been called upon to operate.

It can in fact happen that, in the course of time, there can be variation in the condition of the grass, the charge in the batteries, "luck" in performing cutting operations according to random algorithms, etc.

It is not therefore definite that, once a certain portion P has been selected, the lawn-mower is capable of completing the cutting operation within this portion P in a single working session.

In this connection, purely by way of example, consider the following circumstance.

The control unit 50 selects a certain portion P, associated with the oldest among the time references T present in the first memory module 40.

The control unit 50 controls the movement means 20 and the blades 30 to operate within said portion P. The random algorithm used provides less efficient results than in the previous cutting operation carried out in the same portion P; the lawn-mower consequently exhausts the charge in its batteries before completing the cutting of the portion P.

The control unit 50 sets about saving in the first memory register 40 the identifying data of the zone (smaller than portion P and comprised within it) in which the lawn-mower 1 has operated, and the time reference T relating to when this operation was performed, for example at least the date of the current day, i.e. the day on which the grass was cut in the "sub-portion" of portion P.

The next day, the lawn-mower 1 has completely recharged its batteries. Performing a search in the first memory module 40 for the oldest of the time references T, it will find the one associated with the missing part of portion P.

The control unit 50 will then control the movement means 20 and the blades 30 so as to conclude the suspended cutting operation in the portion P selected, albeit on the previous day.

Assuming reasonable efficiency in the random algorithm, the lawn-mower 1 will conclude the cutting operation in portion P before exhausting the batteries.

The control unit 50 will then be able to identify a new time reference T. In fact the time reference associated with the portion P just cut will have been updated and will no longer appear as the "oldest".

A new time reference will thus be identified, and the portion of cutting area L associated with it will be selected; the lawn-mower 1 will therefore be able to use the residual charge in its battery to start a new cutting operation in the cutting area portion just selected.

In the light of the above, it is clear that the definition of the portions P into which the cutting area L is divided is completely dynamic and continually evolving.

This is due to the fact that the lawn-mower 1 does not operate in always identical conditions, and to the fact that the control unit 50 constantly updates the contents of the first memory register 40. Advantageously, the lawn-mower 1 furthermore comprises a second memory module 41 in which is stored an electronic calendar containing data at least indicating the current day CD.

This data indicating the current day CD is suitably used by the control unit 50 to carry out the appropriate updates to the time references contained in the first memory module 40.

Furthermore, in one embodiment, the data indicating the current day CD can be used by the control unit 50 for identifying the oldest among the time references T.

In a different embodiment, the oldest among the time references T can be identified by comparing together all the time references T.

Preferably, before the lawn-mower 1 is called on to operate in a particular cutting area L, an initial learning stage can be carried out.

In this initial learning stage the control unit 50 determines and memorizes the perimeter X of the cutting area L (figure 3).

In this way, the lawn-mower 1 gets to know the limits within which it must move.

Preferably, a "null" or at any rate "default" time reference is then assigned to the whole cutting area L. For example, a time reference previous to the current date can be chosen, if the current date is available.

In this way, at the beginning of its work, the lawn-mower 1 considers the entire cutting area L as a single portion associated with the above-mentioned initial time reference.

The lawn-mower 1 is then set to work in the cutting area L according to any known algorithm. As there is not yet a division into portions P, the lawn-mower 1 works initially in conventional fashion.

When its "working day" is ended, for example because the batteries are exhausted, the control unit 50 memorizes, in the first memory register 40, which part of cutting area L has been cut (i.e. where the lawn-mower has passed in its activity for that day), together with the respective time reference T (i.e. the current date).

In this way a first portion P of the cutting area L is defined, together with the respective time reference T.

The next day, the lawn-mower 1 proceeds with its work, moving within the cutting area L, but without returning to the zone worked the previous day. In fact, the time reference of the zone worked the previous day has been defined by means of the current date of the previous day itself, while the rest of the cutting area L has a "null" time reference or at any rate the previous reference, as specified above. Proceeding in this way, day after day, the division of the cutting area L into portions P is defined. When cutting operations are completed on the zones with "null" time reference (or anyway with time reference having a similar meaning), the control unit 50 begins to select portions P on which it has already worked at least once.

At this point the cycle described above recommences, with the portions P not necessarily coinciding from one time to another.

As a result of the implementation of the monitoring technique described here, the cutting area L will thus be divided into a plurality of portions; this division will be dynamic, i.e. variable over time, depending on the operating conditions in which the lawn-mower 1 finds itself operating.

As has been described above, given a certain portion P, defined in a previous working cycle, it is not definite that the same portion P will be entirely cut in a single day; the relative updated data is memorized by the control unit 50 in the first memory register 40.

By way of example, an optimal scenario can be created in Italian territory when the cutting area L is divided into 3-4 portions (this is clearly not always possible, since various factors have to be considered, such as the dimensions of the cutting area, the range of the lawn-mower's batteries, other technical characteristics of the lawn-mower itself, etc.).

In fact, at the latitudes and in the environmental conditions generally prevailing in Italy, grass has an average growth rate such that it is perceptible to the human eye after about 3-4 days. In other words, if we imagine the grass in a certain meadow being cut uniformly, and the grass is then cut the next day in just one part of that meadow, no particular lack of uniformity in the level of the grass will be noticeable to the "naked eye", i.e. the part cut the previous day and the part cut on that day itself will be substantially indistinguishable. If the operation is repeated the next day, with the grass in the part that was cut the previous day being cut again, there will still be no particular difference noticeable. The difference will start to become appreciable around the third or fourth day.

Therefore, by dividing a cutting area into three or four portions, and cutting the first portion on a certain day, the second portion the next day, the third portion on the third day and the fourth portion, if any, on the fourth day, and then restarting with the first portion on the fourth/fifth day, the height of the grass will be kept substantially uniform over the entire cutting area. As has just been said, this example can work in Italian territory and in other geographical areas which have similar environmental/meteorological characteristics.

The optimal number of portions into which the cutting area can be cut may vary depending on the typical conditions of the individual area, and in particular on the rate of growth of the grass: the lower the rate of growth of the grass, the greater will be the number of portions into which the cutting area is divided.

It should be noted that the technical solution proposed hitherto is based, in principle, on the following considerations.

The movement of the lawn-mower in areas of small dimensions is enormously more efficient than using it on the whole cutting area without subdivisions, especially if a random type of algorithm is used. Imagine, by way of example, that in a certain cutting area there remains a single square metre of uncut grass. The lawn-mower will take a certain length of time (presumably quite long) if it has to find that square metre within a cutting area with total dimensions, for example, of 100m x 100m.

Suppose now that the cutting area has been divided into 4 equal parts, each measuring 50m x 50m. It will be possible to find the square metre in much less time (and even much less than a quarter of the time taken in the case of an undivided cutting area) if it is being searched for in a single portion. Considering the question from another point of view, keeping the working time of the lawn-mower fixed (32 hours, for example), it is much less efficient to work for 32 consecutive hours over the entire cutting area, rather than to work in 4 segments of 8 hours apiece, each segment being dedicated to one portion, a quarter of the total size of the cutting area. Again, this is because in smaller areas it is more probable (by a factor much larger than the ratio between the areas) to happen upon the zones which need cutting.

Preferably, the control unit 50 is configured for applying a correction algorithm, so as to compensate for the intrinsic inaccuracy of some location systems, such as for example the above-mentioned GPS system used by the locating device 60.

The limits to the accuracy of such systems, in fact, can entail errors of 1-2 metres in the locating of the object in question.

It is therefore advantageous for the control unit 50 to be configured for carrying out the following steps:
- checking that the current position CP provided by the locating device 60 is within a predetermined vicinity of the perimeter of the selected portion P;
- controlling the movement means 20 so as to continue the movement of the lawn-mower 1 for an additional distance, of determinate length, outside the selected portion P.

In other words, the control unit 50 identifies cases in which the lawn-mower 1 finds itself in the immediate vicinity of the perimeter of the selected portion P (if not actually overlapping the perimeter itself).

This information is derived from the combination of the current position CP (provided by the locating device 60), and of the data describing the perimeter of the selected portion P. It is therefore potentially quite inaccurate information, in virtue of what is stated above. In practice, while the calculation made by the control unit 50 indicates that, for example, the lawn-mower 1 is situated on the perimeter of the selected portion P, in reality the lawn-mower 1 could be some distance, about 1-2 metres, away from the perimeter of the said portion P.

The control unit 50 can therefore control a continuation of the movement, and of the cutting action, of the lawn-mower 1 for an additional distance, of determinate length, as indicated above. Purely by way of example, the determinate length of this additional travel may be between 1.5m and 2.5m. Preferably, the lawn-mower 1 can be provided with an encoder, associated, for example, with the rotation shaft of the wheels 20a or to the output shaft of the motor 20b; in this way, the additional distance travelled by the lawn-mower 1 in the course of the correction operation can be accurately measured.

When the lawn-mower 1 has concluded its cutting operation within the selected portion P, it can for example return to the recharging station (not illustrated), so as to accumulate an electrical charge for the operation to be performed the next day.

Note that the techniques for determining the conclusion of the activity of the lawn-mower are well-known in the sector, and will therefore not be described below. Within the scope of the present invention, any of these techniques may be used.

The same applies to the return to the recharging station; there are various techniques, well-known in the sector, which may be used interchangeably in this context.

In the preferred embodiment, the lawn-mower 1 is provided furthermore with a compass 80, operatively associated with the control unit 50.

The compass 80 can be used for maintaining a substantially rectilinear movement in the absence of real information on which to base the movement of the lawn-mower 1.

Consider, by way of example, the case in which the locating device 60 does not succeed in connecting to any positioning system and cannot therefore provide useful data on the current position of the lawn-mower 1.

The compass 80 can also advantageously be used for detecting information relating to the direction in which the lawn-mower 1 is moved, since the locating device 60 provides, preferably, data relating only to the current position PC.

Preferably, the lawn-mower 1 according to the invention furthermore comprises an auxiliary memory module 42, in which are stored operative parameters OP for the lawn-mower, detected during the operation of the lawn-mower 1 itself.

Purely by way of example, the auxiliary memory module 42 can be used to store data relating to the trajectories followed, electrical parameters relating to the consumption of the lawn-mower and the speed of the cutting motor, and data relating to the position of any perimeter wire used for delimiting the cutting area L and to the position of obstacles detected (by means of impacts with them), etc.

Advantageously, the lawn-mower 1 is provided with a transmitter module 51, associated with the above-mentioned auxiliary memory module 42, for transmitting to a remote processor 100 a main signal MS, representing at least some of the operative parameters OP stored in the auxiliary memory module 42. In particular, at least one of the operative parameters OP may be indicative of a breakdown or malfunction of the lawn-mower 1.

Preferably, the transmitter module 51 is a GPRS module.

The remote processor 100 may be part, for example, of a service centre, to which a plurality of lawn-mowers, potentially positioned anywhere in the world, send their data.

This service centre can function as a centralized archive, in which a large mass of data is stored, which can be used both for statistical purposes, and for operative purposes.

In fact, in cases where it is necessary to send a reply signal to a lawn-mower, for example following the signalling of a breakdown or malfunction, the various data stored over time can provide a useful study base for determining an appropriate response. Advantageously, the lawn-mower 1 furthermore comprises a reception module 52, preferably of GPRS type.

By means of the reception module 52, the lawn-mower 1 can receive reply signals RS from the service centre (i.e. from the remote processor 100). In particular, the reply signal RS can incorporate one or more correction/settings data for the operation of the lawn-mower 1 itself.

A solution of this type is particularly advantageous for a variety of reasons.

First of all, as mentioned above, it allows a large mass of data to be collected, which is of great utility for data processing of a statistical and operative character.

Furthermore, where breakdowns or malfunctions occur which can be resolved via software, it is possible to return the lawn-mower to good working order without an operator being brought into physical proximity to the lawn-mower and actually working on it.

This clearly implies a significant improvement in the optimization of resources, and also prevents dishonest local maintenance staff providing deliberately incorrect information on work carried out, profiting from the fact that the owner of the lawn-mower or the service manager is at a distance.

The invention achieves important advantages.

First of all, the lawn-mower in accordance with the invention is able to optimize its own operation, by managing its movement within the cutting area efficiently.

Another advantage is to be found in the fact that the lawn-mower according to the invention is able to perform its task in less time than devices of known type.

Another advantage is to be found in the fact that the lawn-mower according to the invention is able to keep the height of the grass within the cutting area substantially uniform, within acceptable limits.

A further advantage lies in the fact that the lawn-mower according to the invention can be accurately and reliably monitored even without the intervention of an operator on site; in some cases, certain breakdowns, operational mishaps and/or malfunctions can even be overcome without the intervention of an operator on site.

## Claims

1. Lawn-mower comprising:
- a frame (10);
- one or more blades (30) mounted on said frame (10) for cutting grass in a cutting area (L);
- movement means (20) mounted on said frame (10) for moving said lawn-mower (1);
- a first memory module (40) containing:
• principal parameters (M) representative of a plurality of portions (P) into which said cutting area (L) is divided;
• time references (T), each associated with a respective one of said portions (P) of the cutting area (L), each time reference (T) being representative of when the lawn-mower (1) has effected a cutting action in said portion (P);
- a control unit (50) operatively connected to said first memory module (40), to said movement means (20) and to said one or more blades (30), said control unit (40) being configured for:
• identifying the oldest among said time references (T);
• selecting the portion (P) of cutting area (L) associated with the time reference (T) identified;
• controlling said movement means (20) and said one or more blades (30) for moving said lawn-mower (1) into the selected portion (P) of the cutting area (L) and cutting grass within said selected portion (P).

2. Lawn-mower according to claim 1 comprising furthermore a locating device (60) suitable for determining a current position (CP) of the lawn-mower (1) and operatively associated with said control unit (50) at least for the movement of said lawn-mower (1).

3. Lawn-mower according to claim 2 wherein said locating device (60) is a GPS (Global Positioning System) device.

4. Lawn-mower according to any one of the preceding claims wherein said control unit (50) is configured for determining a perimeter (X) of said cutting area (L) at an initial learning stage.

5. Lawn-mower according to any one of the preceding claims wherein said control unit (50) is configured for updating said principal parameters (M) and/or said time references (T), after carrying out the cutting operation in the selected portion (P).

6. Lawn-mower according to any one of the preceding claims, comprising furthermore a second memory module (41) in which is stored an electronic calendar containing data indicating the current day (CD).

7. Lawn-mower according to claims 5 and 6 wherein said control unit (50) is configured for performing said update depending on the current date (CD) indicated in said second memory module (41).

8. Lawn-mower according to claim 2 and any one of claims 3 to 7 when dependent at least on claim 2, wherein said control unit (50) is configured for:
- checking that the current position provided by said locating device (60) is within a predetermined vicinity of the perimeter of the selected portion (P);
- controlling said movement means (20) so as to continue the movement of said lawn-mower (1), over an additional path of determinate length outside the selected portion (P).

9. Lawn-mower according to any one of the preceding claims, comprising furthermore an auxiliary memory module (42) containing operative parameters (OP) for the lawn-mower (1), detected during the operation of said lawn-mower (1).

10. Lawn-mower according to claim 9 wherein said control unit (50) comprises a transmitter module (51), associated with said auxiliary memory module (42), for transmitting to a remote processor (100) a main signal (MS), representative of at least some of said operative parameters (OP).

11. Lawn-mower according to claim 10 wherein at least one of said operative parameters (OP) is indicative of a breakdown or malfunction of said lawn-mower (1).

12. Lawn-mower according to any one of claims from 9 to 11 wherein said control unit (50) furthermore comprises a reception module (52) for receiving, from said remote processor (100), a reply signal (RS) in response to said main signal (MS), said reply signal (RS) incorporating one or more correction/setting data (D) for the operation of said lawn-mower (1).

13. Lawn-mower according to any one of claims from 10 to 12 wherein said transmitter module (51) and/or said reception module (52) are GPRS modules.

14. Method for monitoring the movement of a lawn-mower, comprising:
- configuring a lawn-mower (1) provided with:
• a frame (10) ;
• one or more blades (30) mounted on said frame (10) for cutting grass in a cutting area (L);
• movement means (20) mounted on said frame (10) for moving said lawn-mower (1);
- memorizing in a first memory module (40) principal parameters (M) representative of a plurality of portions (P) into which said cutting area (L) is divided;
- memorizing in said first memory module (40) time references (T), each associated with a respective one of said portions (P) of the cutting area (L), each time reference (T) being representative of when the lawn-mower (1) has effected a cutting action in said portion (P);
- identifying the oldest among said time references (T) ;
- selecting the portion (P) of cutting area (L) associated with the time reference (T) identified;
- controlling said movement means (20) and said one or more blades (30) for moving said lawn-mower (1) into the selected portion (P) of the cutting area (L) and cutting grass within said selected portion (P).

## Patentansprüche

1. Rasenmäher, umfassend:
- ein Gehäuse (10);
- eine oder mehrere am Gehäuse (10) befestigte Klingen (30) zum Schneiden von Gras in einem Schneidegebiet (L);
- am Gehäuse (10) befestigte Bewegungsmittel (20) zum Bewegen des Rasenmähers (1);
- ein erstes Speichermodul (40), enthaltend:
• Hauptparameter (M), die repräsentativ für eine Vielzahl von Abschnitten (P) sind, in welche das Schneidegebiet (L) unterteilt ist;
• Zeitreferenzen (T), die jeweils einem entsprechenden Abschnitt (P) des Schneidegebiets (L) zugeordnet sind, wobei jede Zeitreferenz (T) repräsentativ dafür ist, wenn der Rasenmäher (1) eine Schneidehandlung in dem Abschnitt (P) durchgeführt hat;
- eine Steuereinheit (50), die mit dem ersten Speichermodul (40), mit den Bewegungsmitteln (20) und der einen oder den mehreren Klingen (30) wirkverbunden ist, wobei die Steuereinheit (40) für Folgendes konfiguriert ist:
• Identifizierung der ältesten der Zeitreferenzen (T);
• Auswahl des Abschnitts (P) des Schneidegebiets (L), der der identifizierten Zeitreferenz zugeordnet ist;
• Steuerung der Bewegungsmittel (20) und der einen oder mehreren Klingen (30) zum Bewegen des Rasenmähers (1) in den ausgewählten Abschnitt (P) des Schneidegebiets (L) und Schneiden des Grases innerhalb des ausgewählten Abschnitts (P).

2. Rasenmäher nach Anspruch 1, ferner umfassend eine Lokalisierungsvorrichtung (60), die für die Bestimmung einer aktuellen Position (CP) des Rasenmähers (1) geeignet ist und mit der Steuereinheit (50) zumindest für die Bewegung des Rasenmähers (1) wirkverbunden ist.

3. Rasenmäher nach Anspruch 2, wobei die Lokalisierungsvorrichtung (60) eine GPS-Vorrichtung (Global Positioning System) ist.

4. Rasenmäher nach einem der vorangehenden Ansprüche, wobei die Steuereinheit (50) für eine Bestimmung eines Perimeters (X) des Schneidegebiets (L) in einer anfänglichen Lernphase konfiguriert ist.

5. Rasenmäher nach einem der vorangehenden Ansprüche, wobei die Steuereinheit (50) für eine Änderung der Hauptparameter (M) und/oder der Zeitreferenzen (T) nach der Ausführung des Schneidebetriebs im ausgewählten Abschnitt (P) konfiguriert ist.

6. Rasenmäher nach einem der vorangehenden Ansprüche, ferner umfassend ein zweites Speichermodul (41), in dem ein elektronischer Kalender gespeichert ist, der Daten enthält, die den aktuellen Tag (CD) angeben.

7. Rasenmäher nach Anspruch 5 und 6, wobei die Steuereinheit (50) zur Ausführung der Änderung je nach dem aktuellen Datum (CD) konfiguriert ist, das im zweiten Speichermodul (41) angegeben ist.

8. Rasenmäher nach Anspruch 2 und einem der Ansprüche 3 bis 7, sofern diese mindestens von Anspruch 2 abhängen, wobei die Steuereinheit (50) für Folgendes konfiguriert ist:
- Überprüfung, ob die aktuelle, von der Lokalisierungsvorrichtung (60) bereitgestellte Position innerhalb einer festgelegten Nähe des Perimeters des ausgewählten Abschnitts (P) liegt;
- Steuerung der Bewegungsmittel (20), sodass die Bewegung des Rasenmähers (1) über eine zusätzliche Bahn einer festgelegten Länge außerhalb des ausgewählten Abschnitts (P) fortgeführt wird.

9. Rasenmäher nach einem der vorangehenden Ansprüche, ferner umfassend ein zusätzliches Speichermodul (42), das Betriebsparameter (OP) des Rasenmähers (1) enthält, die während des Betriebs des Rasenmähers (1) erfasst wurden.

10. Rasenmäher nach Anspruch 9, wobei die Steuereinheit (50) ein Sendemodul (51) umfasst, das an das zusätzliche Speichermodul (42) anschließt, um ein Hauptsignal (MS) an einen entfernten Prozessor (100) zu senden, das für mindestens einige der Betriebsparameter (OP) repräsentativ ist.

11. Rasenmäher nach Anspruch 10, wobei mindestens einer der Betriebsparameter (OP) auf ein Versagen oder eine Funktionsstörung des Rasenmähers (1) hinweist.

12. Rasenmäher nach einem der Ansprüche 9 bis 11, wobei die Steuereinheit (50) ferner ein Empfangsmodul (52) zum Empfang eines Antwortsignals (RS) auf das Hauptsignal (MS) vom entfernten Prozessor (100) umfasst, wobei das Antwortsignal (RS) einen oder mehrere korrigierende/einstellende Datenwerte (D) für den Betrieb des Rasenmähers (1) einschließt.

13. Rasenmäher nach einem der Ansprüche 10 bis 12, wobei das Sendemodul (51) und/oder Empfangsmodul (52) GPRS-Module ist/sind.

14. Verfahren zur Überwachung der Bewegung eines Rasenmähers, umfassend:
- Konfigurierung eines Rasenmähers (1), der mit Folgendem ausgestattet ist:
• einem Gehäuse (10);
• einer oder mehreren am Gehäuse (10) befestigten Klingen (30) zum Schneiden von Gras in einem Schneidegebiet (L);
• am Gehäuse (10) befestigten Bewegungsmitteln (20) zum Bewegen des Rasenmähers (1);
- Speicherung von Hauptparametern (M) in einem ersten Speichermodul (40), die repräsentativ für eine Vielzahl von Abschnitten (P) sind, in welche das Schneidegebiet (L) unterteilt ist;
- Speicherung von Zeitreferenzen (T) im ersten Speichermodul (40), die jeweils einem entsprechenden Abschnitt (P) des Schneidegebiets (L) zugeordnet sind, wobei jede Zeitreferenz (T) repräsentativ dafür ist, wenn der Rasenmäher (1) eine Schneidehandlung in dem Abschnitt (P) durchgeführt hat;
- Identifizierung der ältesten Zeitreferenz (T);
- Auswahl des Abschnitts (P) des Schneidegebiets (L), der der identifizierten Zeitreferenz (T) zugeordnet ist;
- Steuerung der Bewegungsmittel (20) und der einen oder mehreren Klingen (30) zum Bewegen des Rasenmähers (1) in den ausgewählten Abschnitt (P) des Schneidegebiets (L) und Schneiden des Grases innerhalb des ausgewählten Abschnitts (P).

## Revendications

1. Tondeuse à gazon comprenant :
- un châssis (10) ;
- une ou plusieurs lames (30) montées sur ledit châssis (10) pour couper l'herbe dans une zone de coupe (L) ;
- un moyen de déplacement (20) monté sur le châssis (10) pour déplacer ladite tondeuse à gazon (1) ;
- un premier module de mémoire (40) contenant :
• des paramètres principaux (M) représentatifs d'une pluralité de portions (P) dans lesquelles ladite zone de coupe (L) est divisée ;
• des références temporelles (T), associée chacune à une des portions respectives (P) de la zone de coupe (L), chaque référence temporelle (T) étant représentative du moment où la tondeuse à gazon (1) a effectué une action de coupe dans ladite portion (P) ;
- une unité de commande (SO) raccordée opérationnellement audit premier module de mémoire (40), audit moyen de déplacement (20) et à ladite une ou plusieurs lames (30), ladite unité de commande (40) étant configurée pour :
• identifier la plus ancienne desdites références temporelles (T) ;
• sélectionner la portion (P) de la zone de coupe (L) associée à la référence temporelle (T) identifiée ;
• contrôler ledit moyen de déplacement (20) et ladite une ou plusieurs lames (30) pour déplacer ladite tondeuse à gazon (1) à l'intérieur de la portion sélectionnée (P) de la zone de coupe (L) et pour couper l'herbe à l'intérieur de la portion (P) sélectionnée.

2. Tondeuse à gazon selon la revendication 1, comprenant également un dispositif de localisation (60) pouvant déterminer une position (CP) actuelle de la tondeuse à gazon (1) et associée de façon opérationnelle à ladite unité de commande (50) au moins pour le déplacement de ladite tondeuse à gazon (1).

3. Tondeuse à gazon selon la revendication 2, dans laquelle ledit dispositif de localisation (60) est un dispositif GPS (Global Positioning System - Système de Positionnement Global).

4. Tondeuse à gazon selon l'une quelconque des revendications précédentes, dans laquelle ladite unité de commande (50) est configurée pour déterminer un périmètre (X) de ladite zone de coupe (L) à un stage d'apprentissage initial.

5. Tondeuse à gazon selon l'une quelconque des revendications précédentes, dans laquelle ladite unité de commande (50) est configurée pour mettre à jour lesdits paramètres principaux (M) et/ou lesdites références temporelles (T), après l'exécution de l'opération de coupe dans la portion sélectionnée (P).

6. Tondeuse à gazon selon l'une quelconque des revendications précédentes, comprenant également un deuxième module de mémoire (41) dans lequel est stocké un calendrier électronique contenant des données indiquant le jour actuel (CD).

7. Tondeuse à gazon selon les revendications 5 et 6 précédentes, dans laquelle ladite unité de commande (50) est configurée pour procéder à la mise à jour en fonction de la date actuelle (CD) indiquée dans ledit second module de mémoire (41).

8. Tondeuse à gazon selon la revendication 2 et selon une des revendications 3 à 7, lorsqu'elles dépendent au moins de la revendication 2, dans laquelle ladite unité de commande (50) est configurée pour :
- vérifier que la position actuelle fournir par ledit dispositif de localisation (60) se trouve dans un voisinage prédéterminé du périmètre de la portion sélectionnée (P) ;
- contrôler ledit moyen de déplacement (20) de manière à continuer le déplacement de ladite tondeuse à gazon (1), sur un parcours supplémentaire d'une longueur déterminée à l'extérieur de la portion sélectionnée (P).

9. Tondeuse à gazon selon l'une quelconque des revendications précédentes, comprenant également un module de mémoire auxiliaire (42) contenant des paramètres opérationnels (OP) pour la tondeuse à gazon (1), détectés durant le fonctionnement de ladite tondeuse à gazon (1).

10. Tondeuse à gazon selon la revendication 9, dans laquelle ladite unité de commande (50) comprend un module émetteur (51), associé audit module de mémoire auxiliaire (42), pour transmettre à un processeur à distance (100) un signal principal (MS), représentatif d'au moins quelques-uns desdits paramètres opérationnels (OP).

11. Tondeuse à gazon selon la revendication 10, dans laquelle au moins un desdits paramètres opérationnels (OP) est indicatif d'une panne ou d'un dysfonctionnement de ladite tondeuse à gazon (1).

12. Tondeuse à gazon selon l'une des revendications 9 à 11, dans laquelle ladite unité de commande (50) comprend également un module récepteur (52) pour recevoir, à partir d'un processeur à distance (100), un signal de réponse (RS) en réponse audit signal principal (MS), ledit signal de réponse (RS) incorporant une ou plusieurs données de correction/réglage (D) pour le fonctionnement de ladite tondeuse à gazon (1).

13. Tondeuse à gazon selon l'une quelconque des revendications 10 à 12, dans laquelle ledit module émetteur (51) et/ou ledit module récepteur (52) sont des modules GPRS.

14. Procédé de surveillance du déplacement d'une tondeuse à gazon, comprenant :
- configurer une tondeuse à gazon (1) équipée de :
• un châssis (10) ;
• une ou plusieurs lames (30) montées sur ledit châssis (10) pour couper l'herbe dans une zone de coupe (L) ;
• un moyen de déplacement (20) monté sur le châssis (10) pour déplacer ladite tondeuse à gazon (1) ;
- mémoriser dans un premier module de mémoire (40) des paramètres principaux (M) représentatifs d'une pluralité de portions (P) dans lesquelles ladite zone de coupe (L) est divisée ;
- mémoriser dans un premier module de mémoire (40) des références temporelles (T), associée chacune à une respective desdites portions (P) de la zone de coupe (L), chaque référence temporelle (T) étant représentative du moment où la tondeuse à gazon (1) a effectué une action de coupe dans ladite portion (P) ;
- identifier la plus ancienne des références temporelles (T)
- sélectionner la portion (P) de la zone de coupe (L) associée à la référence temporelle (T) identifiée ;
- contrôler ledit moyen de déplacement (20) et ladite une ou plusieurs lames (30) pour déplacer ladite tondeuse à gazon (1) à l'intérieur de la portion sélectionnée (P) de la zone de coupe (L) et pour couper l'herbe à l'intérieur de la portion (P) sélectionnée.
